# EUROPEAN PATENT SPECIFICATION

(11) **EP 4 464 563 B1**
(45) Date of publication and mention of the grant of the patent: **04.03.2026**
(21) Application number: 23173418.7
(22) Date of filing: 15.05.2023
(51) Int. Cl.: B60T 17/08

(54) **SPRING BRAKE CYLINDER FOR A VEHICLE BRAKE**
FEDERSPEICHERBREMSZYLINDER FÜR EINE FAHRZEUGBREMSE
CYLINDRE DE FREIN À RESSORT POUR FREIN DE VÉHICULE

(43) Date of publication of application: 20.11.2024
(73) Proprietor: KNORR-BREMSE Systeme für Nutzfahrzeuge GmbH, 80809 München (DE)
(72) Inventor: LETOT, Guillaume, 14940 Sannerville (FR)

(56) References cited:
- EP-B1- 0 864 054
- WO-A1-02/44004
- WO-A1-2023/058794
- DE-A1- 102007 041 769

## Description

The invention refers to a spring brake cylinder for a vehicle brake according to the preamble of claim 1, to a combined service and spring brake cylinder according to claim 11, to a vehicle brake according to claim 12 and to a method for manufacturing a spring brake cylinder according to claim 13.

For servicing and repairing spring brakes of heavy utility vehicles it can be necessary, to mechanically release the spring brakes which are used as parking brakes. The spring brakes are pneumatically activated, where the spring brake cylinders when driving, are deactivated by ventilating them with compressed air. On the other hand, the spring brakes are activated by bleeding the spring brakes cylinders, thereby causing pressure springs to actuate pistons in the spring brake cylinders for activation of the spring brake to the parking brake position.

In a common type of spring brake cylinder, it is possible to mechanically release the parking brake of the vehicle during service and repair of the vehicle, by unscrewing a release screw of the spring brake cylinder. This release screw, by means of a head at its one end, brings the piston with it and thereby compresses the pressure spring so that the parking brake is released and put out of function. From the safety point of view, it is important that service and repair personnel can carry out a visual control of the brake cylinder, in order to unambiguously determine whether the parking brake is activated or has been mechanically released, and is thus not activated. The release screw is axially locked in the brake cylinder and the piston is brought out by a rotationally locked, running nut which has been screwed on to the release screw. Thus, the release screw stays within the brake cylinder, and thus only a screw head for the manipulation of the release screw is located outside of the brake cylinder during the entire release sequence. EP 0 864 054 B1 describes a generic spring brake cylinder for a vehicle brake. There, the first and of the pin indicator is screwed with the indication cap of the indication body, which is accommodated within a long bore of the piston rod. For the making of the screw connection, the piston rod of the piston has to be manufactured as a separate part, so that the piston rod can only be attached to the piston after the screw connection has been made. A further spring brake cylinder is known from DE 10 2007 041769 A1.

It is an object of the invention to provide a spring brake cylinder for a vehicle brake that is easier to manufacture. Further, also a combined service and spring brake cylinder and a vehicle brake shall be provided that comprise such a spring brake cylinder. Finally, also a method for manufacturing such a spring brake cylinder shall be provided.

This object is solved by the features of claims 1, 11, 12 and 13.

### Disclosure of the invention

The invention starts from a spring brake cylinder for a vehicle brake comprising:
a) a cylinder housing with a casing wall and a cylinder-bottom,
b) a spring brake piston running in said cylinder housing for activation of the brake,
c) a pressure spring positioned between the spring brake piston and the cylinder-bottom for activating the parking brake by mechanically influencing the spring brake piston,
d) a hollow release screw with a first troughbore, axially locked against movement relative to the cylinder-bottom for the mechanical release of the parking brake, which at a first end is rotatably mounted in the cylinder-bottom and which has a screw head on the outside of the cylinder-bottom and which at a second end runs freely in a bore of the spring brake piston,
   e) a rotationally locked, running nut threaded onto said release screw, where said running nut has an outer end position at a set distance from said cylinder-bottom and is arranged to, through contact against the spring brake piston, bring the spring brake piston in the axial direction of the release screw when turning the release screw by manipulation of the screw head, and
   f) a relative to the release screw axially displaceable pin indicator arranged in the first throughbore of the release screw, and
   g) a locking piece that has a second throughbore, and a first thread which is threaded with a second thread of the release screw, where the pin indicator extends through the second throughbore, wherein
   h) the pin indicator at a first end, located within the cylinder housing, is axially fixed to a position sensing means which is provided with a contact surface for contact against the running nut, and wherein
   i) the pin indicator at a second end has an indication body arranged to visibly protrude out of the screw head of the release screw in case of axial displacement of the pin indicator caused by axial displacement of the running nut from its outer end position, and of the contact surface of the position sensing means, which contact surface is in contact with the running nut, during rotation of the release screw for mechanical release of the parking brake, where
j) the position sensing means includes an indicator cap with a central opening, where the indicator cap and the locking piece are axially displacable to each other, wherein
k) the first end of the pin indicator is designed to snap fit with a central opening of the indicator cap, and
l) at least one first spring is arranged between the indicator cap and a bottom of the bore of the spring brake piston, and
m) the second throughbore of the locking piece is provided with a tool engagement surface which is designed for a rotationally fixed engagement of a rotation tool.

With such a design of the spring brake cylinder, a simple method for manufacturing the spring brake cylinder, particularly of indications means of the spring brake cylinder, that enable an external visual control of whether the brake is activated or whether it has been mechanically released and thus deactivated, is provided which includes the following steps:
a) positioning of the first spring in the bore of the spring brake piston at the bottom of the bore,
b) providing a preassembled unit of the indicator cap and the locking piece within the bore of the spring brake piston, so that the preassembled unity can contact the first spring,
c) positioning of the release screw together with the nut screwed on in the cylinder housing and in the the bore of the spring brake piston,
d) inserting a rotation tool into the first troughbore of the release screw until it engages the internal tool engagement surface in the second troughbore of the locking piece,
e) turning the rotation tool in a way that first thread of the locking piece is threaded with the second thread of the release screw, where the locking piece is held in a coaxial position with the release screw by the indicator cap, which is axially preloaded by the first spring,
f) removing the rotation tool out of the first troughbore of the release screw,
g) inserting the pin indicator into the first troughbore of the release screw until the first end of the pin indicator axially snap fits with the central opening of the indicator cap, where the indicator cap is axially supported by the first spring.

Particuarly, then, the piston rod and the piston can be manufactured as a one piece. Also, the piston rod is a part of the piston.

Preferred embodiments of the invention are presented in the subclaims.

According to a preferred embodiment, the indicator cap has a cylindrical basic body with the central opening and axial tongues protruding from the basic body, which ends form the contact surface and which radially at least partly embrace the locking piece.

Then, the ends of the tongues can be provided with radially inward protruding clips that axially limit an axial movement of the locking piece relative to the indicator cap. In this way, the locking piece can be secured to the indicator cap.

Additionnally or alternatively, the axial tongues can be provided with guiding means for axially guiding the indicator cap and the locking piece to each other. Particularly, the guiding means can comprise radial inner protrusions of the axial tongues. Further, the guiding means can also be designed, to rotationally lock the indicator cap and the locking piece to each other, particularly during the manufacturing of the spring brake cylinder, as will be described later.

According to an embodiment, the indication body is arranged to be lowered into a recess of the screw headof the release screw.

Further, the contact surface can be brought to accompany the axial displacement of the running nut through spring pressure of at least one spring.

Preferably, the indicator cap is made of an elastic plastic material, particularly to facilitate the manufacture of the snap fit of the first end of the pin indicator with the central opening of the indicator cap. For this, for example, from the central opening of the indicator cap slits are extending in radial direction to provide elasticity of the central bore for the snap fit with the first end of the pin indicator.

Also, preferably, the piston can be provided with a piston rod, in which the bore is formed. Particularly, the piston rod, viewed from the piston, is directed to the cylinder-bottom of the housing.

The indications means of the spring brake cylinder, that enable an external visual control of whether the brake is activated or whether it has been mechanically released and thus deactivated, particularly comprise the indicator pin, the position sensing means (indicator cap), the release screw, the running nut and the locking piece. Optionally, also the second spring is comprised.

The invention also refers to a combined service and spring brake cylinder comprising a spring brake cylinder as described above.

Further, the invention also refers to a vehicle brake comprising the said combined service and spring brake cylinder or the said spring brake cylinder.

The other features and advantages of the invention will become obvious from the following description of a preferred embodiments.

### DRAWINGS

The drawings show preferred embodiments of the invention, where in the figures
- Fig. 1: shows a cut cross-section of a part of a spring brake cylinder according to a preferred embodiment of the invention;
- Fig. 2: shows an enlarged detail of Fig. 1, but without cerain parts thereof;
- Fig. 3: shows a cut cross-section of indications means of the spring brake cylinder of Fig. 1, that enable an external visual control of whether the brake is activated or whether it has been mechanically released and thus deactivated;
- Fig. 4: shows an indicator cap of the indications means of Fig. 3 according to a first embodiment;
- Fig. 5: shows an indicator cap of the indication means of Fig. 3 according to a second embodiment;
- Fig. 6: shows a preassembled unit of the indicator cap and a locking piece of the indications means of Fig. 3;
- Fig. 7: shows a step of a preferred embodiment of a method of manufacturing the spring brake cylinder of Fig. 1, particularly the indications means, using a rotation tool;
- Fig. 8: shows a further step of the preferred embodiment of the method of manufacturing the spring brake cylinder of Fig. 1, particularly the indications means, using the rotation tool;
- Fig. 9: shows a flowchart of the steps of the preferred embodiment of the method of manufacturing the spring brake cylinder of Fig. 1, particularly the indications means.

### DESCRIPTION OF THE DRAWINGS

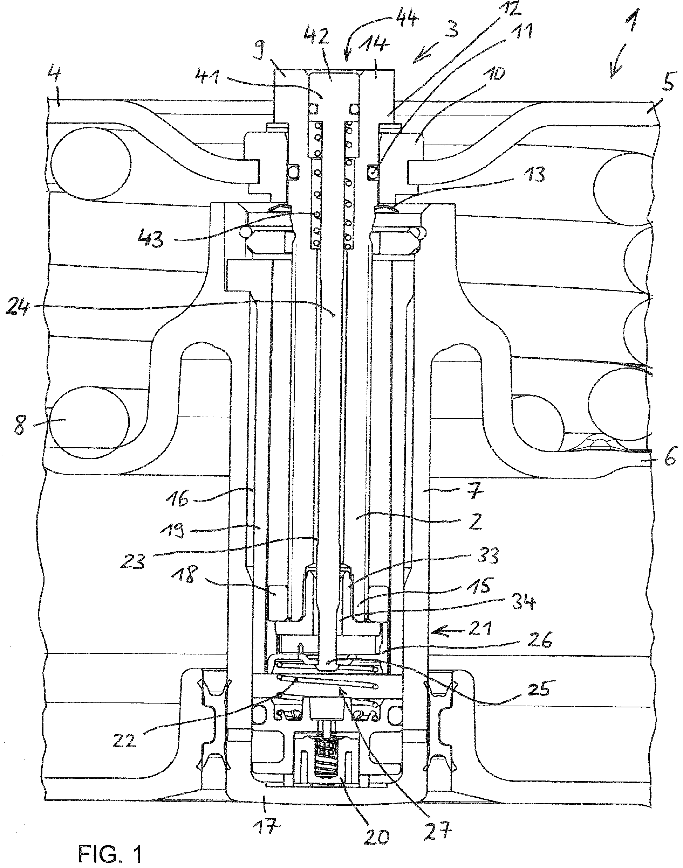

Fig. 1 shows a cut cross-section of a part of a spring brake cylinder 1 of a vehicle parking brake, which is spring activated, according to a preferred embodiment of the invention. It comprises a release screw 2 for the mechanical release of the spring brake. The spring brake cylinder 1 is provided with an indication means 3, which enables an external visual control of whether the parking brake is activated or whether it has been mechanically released and thus deactivated and which will be described in detail later.

The spring brake cylinder 1 is of the pneumatic kind and is shown partially in a cut view, where the connections for compressed air have not been shown. The rest of the spring brake cylinder 1 is of a well-known kind, for which reason it will not be described in detail here. From **Fig. 1****,** **Fig. 7** and **Fig. 8****,** it can be seen that the spring brake cylinder 1 comprises a cylinder housing 4 with a casing wall and a cylinder bottom 5. A rotationally locked spring brake piston 6 equipped with a piston rod 7 for the activation of the brake runs inside the cylinder housing 4. The parking brake is not shown, but can for example be of a commonly known disc brake kind, with brake caliper and brake linings. The spring brake piston 6 is sealed against the casing wall of the cylinder housing 4 by means of a piston sealing of a suitable elastic material.

A pressure spring 8 of the spiral kind is positioned between the spring brake piston 6 and the cylinder bottom 5 of the cylinder housing 4 in order to activate the parking brake by mechanically loading the spring brake piston 6.

The release screw 2 for the mechanical release of the parking brake is at a first end 9 rotatably mounted in the cylinder bottom 5 via a bearing bush 10. The bearing bush 10 has been fixed to the cylinder bottom 5 e.g. by pressing. An O-ring seals 11 between the release screw 2 and the bearing bush 10 (and thereby the cylinder housing 4) in order to achieve protection of all internal parts of the spring brake cylinder 1 against intrusion of moisture and dirt and accompanying corrosion. The release screw 2 is axially locked against movement relative to the cylinder bottom 5 by means of a circumferential flange 12 and a locking ring 13, which prevents the release screw 2 from slipping out. The release screw 2 extends at the first end 9 outside of the cylinder bottom 5 in which place it has the flange 12 and a screw head 14 of for example hexagonal shape for use of a suitable torque tool to turn the release screw 2. The release screw 2 extends axially through the centre line of the pressure spring 8 and at a second end 15 it runs freely in a blind bore 16 of the piston rod 7, where the blind bore 16 is limited by a piston rod bottom 17, which is turned away from the cylinder bottom 5.

The release screw 2 is provided with an external thread which extends along the main length of the release screw 2. A running nut 18 is screwed with an internal thread onto the external thread of the release screw 2. The running nut 18 on its peripheral outside is of non-round shape, in the example shown a hexagonal shape, in order to lock it rotationally in relation to a sleeve 19 rotatably locked within the piston rod 7, by means of a corresponding shape in the radial inner diameter of the sleeve 19.

The second end 15 of the release screw 2 is located vis-à-vis the piston rod bottom 17, where here e.g. a breathing valve 20 is accommodated, which function is not of interest in the context of the invention. Between the breathing valve 20 and a position sensing means 21 arranged on the second end 15 of the release screw 2, a first spring 22 e.g. of the helical kind is provided. The breathing valve 20 is optional and can also be omitted.

In **Fig. 1****,** the running nut 18 is shown in an outer end position at a set distance from the cylinder bottom 5. The running nut 18 is arranged to, here particularly through direct or indirect contact with the piston rod 7, bring the spring brake piston 6 with it in the axial direction of the release screw 2 when turning the release screw 2 by manipulation of the screw head 14. In so doing, the pressure spring 8 is also compressed.

The release screw 2 is provided with a central first throughbore 23 which extends in coparallel with the symmetry axis of the release screw 2. A pin indicator 24 extends freely through the first throughbore 23 where it is axially displaceable relative to the release screw 2. The pin indicator 24 can be both, a solid bar or a hollow pipe.

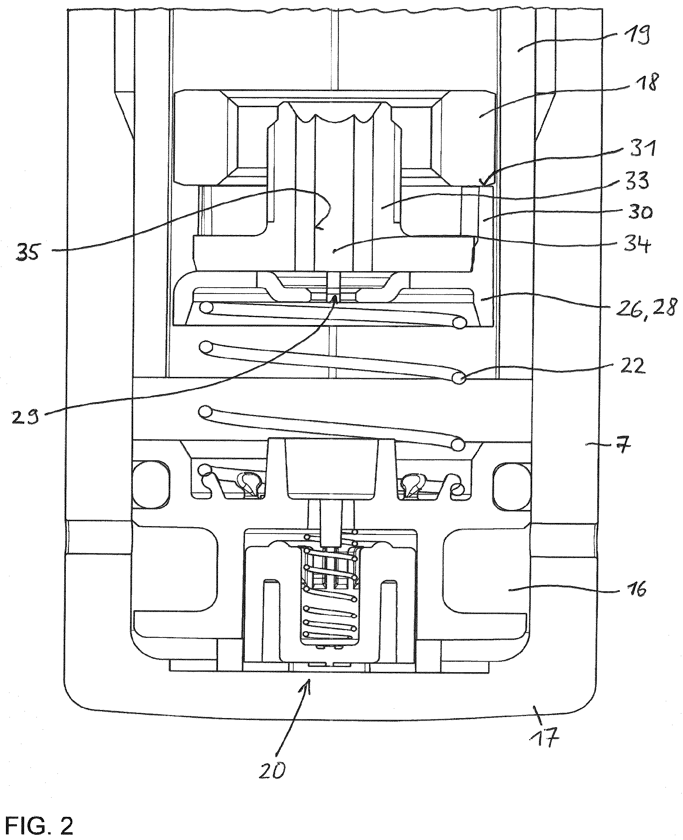

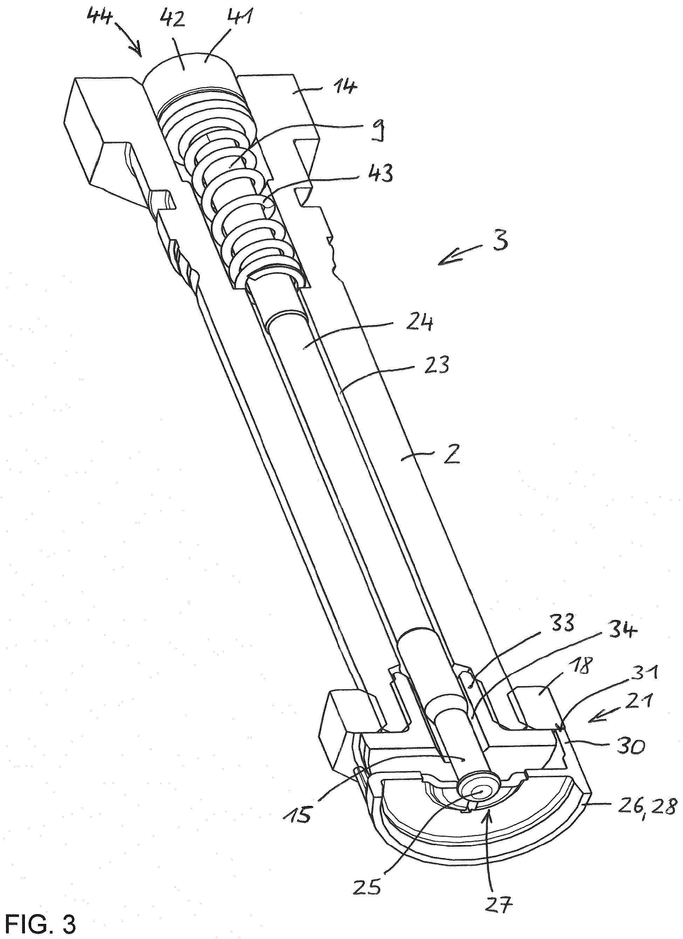

The pin indicator 24 is at a first end 25, located within the cylinder housing 4 and connected with an indicator cap 26, by a snap fit 27. For the snap fit 27, the first end 25 of pin indicator 24 is e.g. formed as head with a radial protrusion **(****Fig. 3****).** The indicator cap 26 e.g. has a cylindrical basic body 28 with a central opening 29 and axial tongues 30 protruding from the basic body 28, which ends form a contact surface 31. The contact surface 31 of the axial tongues 30 of the indicator cap 26 are designed to come in contact with a front face of the running nut 18 when it has reached the second end 15 of the release screw, as shown in **Fig. 1** and **Fig. 3****.** In **Fig. 2****,** the pin indicator 24 and the release screw 2 are not shown.

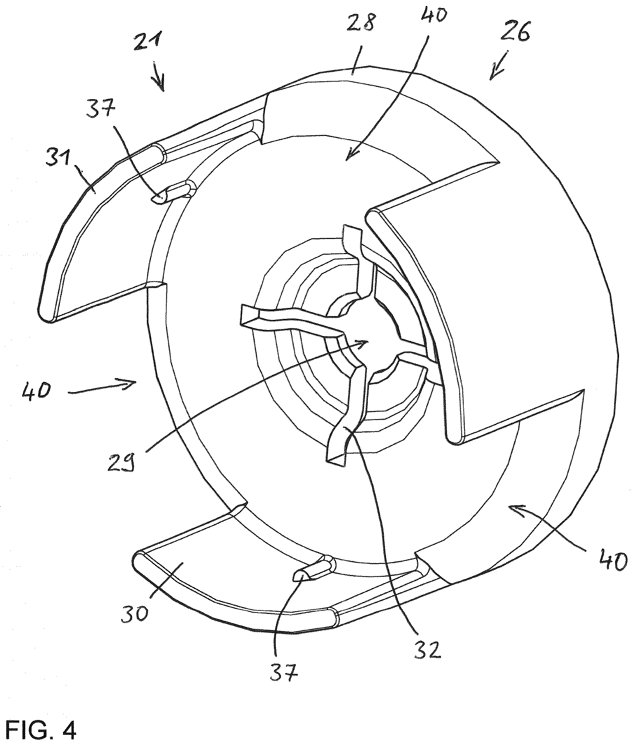

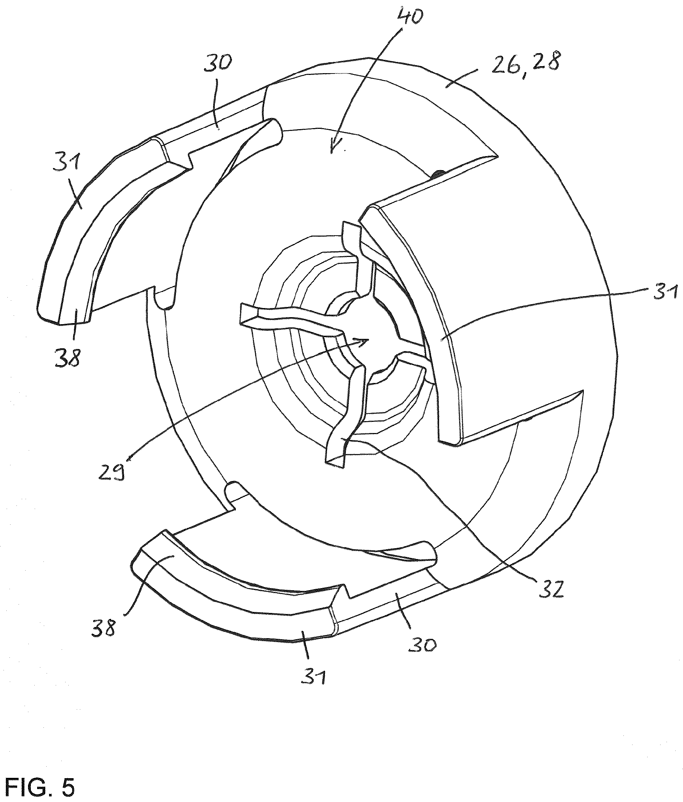

Embodiments of the indicator cap 26 are shown in **Fig. 4** and in **Fig. 5****.** For the snap fit 27, particularly slits 32 are extending from the central opening 29 of the basic body 28 in radial direction to provide elasticity of the central opening 29 for the snap fit 27, when the first end 25 of the pin indicator 24 intrudes into it. Particularly, the indicator cap 26 is made of an elastic plastic material as a whole. The indicator cap 26 is part of the position sensing means 21 which sense the position of the running nut 18 when it has been screwed into the area of the second end 15 of the release screw 2.

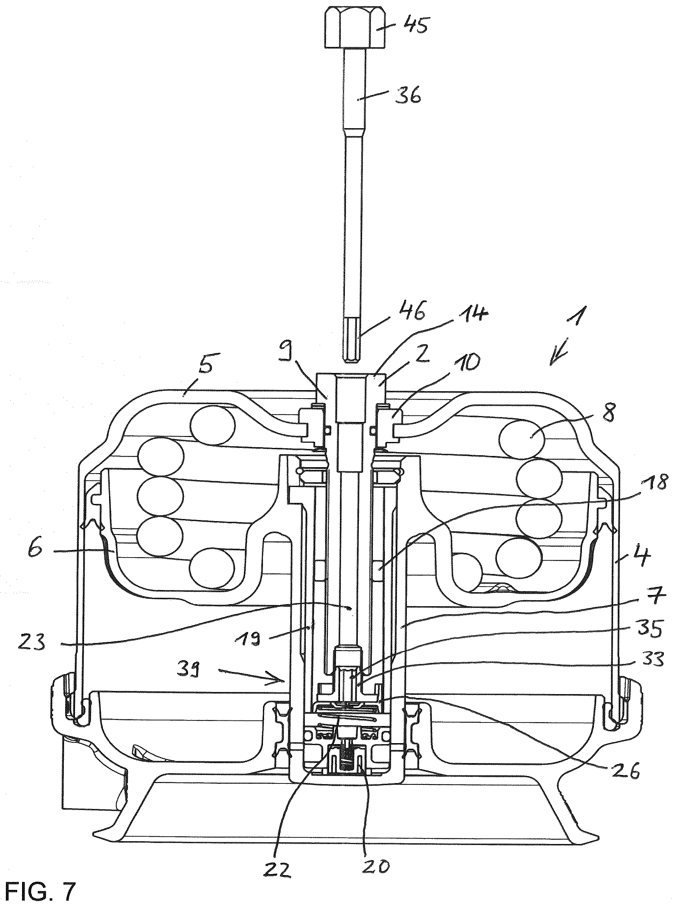

Further, a locking piece 33 that has a second throughbore 34, and a first, for example radial outer thread which is threaded with a second, for example radial inner thread of the release screw 2, is arranged within the first troughbore 23 of the release screw 2, where the pin indicator 24 extends also through said second throughbore 34. The second throughbore 34 of the locking piece 33 is provided with an internal tool engagement surface 35, which is designed for a rotationally fixed engagement of a complementary tool engagement surface 46 of a rotation tool 36 **(****Fig. 7****).** Further, the axial tongues 30 protruding from the basic body 28 of the indicator cap 26, which ends form the contact surface 31 with the running nut 18, radially embrace the locking piece 33, so that the ends of these axial tongues 30 can come into contact with the front surface of the running nut 18. Further, to provide a radial elasticity of the tongues 30, peripheral recesses 40 can be arranged between the tongues 30.

According to one embodiment of the indicator cap 26 shown in **Fig. 4****,** the axial tongues 30 of the indicator cap 26 can be provided with guiding means for axially guiding the locking piece 33, particularly when threaded with the release screw 2, as will be explained later. For instance, these guiding means can comprise radial inner protrusions 37 of the axial tongues 30. These radial inner protrusions 37 can be guided in axial recesses (not shown) in the outer diameter of the locking piece 33.

Alternatively, or additionally, according to another embodiment of the of the indicator cap 26 shown in **Fig. 5****,** the ends of the tongues 30 can be provided with radially inward protruding clips 38 that axially limit an axial movement of the locking piece 33 relative to the indicator cap 26 In this way, the locking piece 33 can be secured to the indicator cap 26 and vice versa.

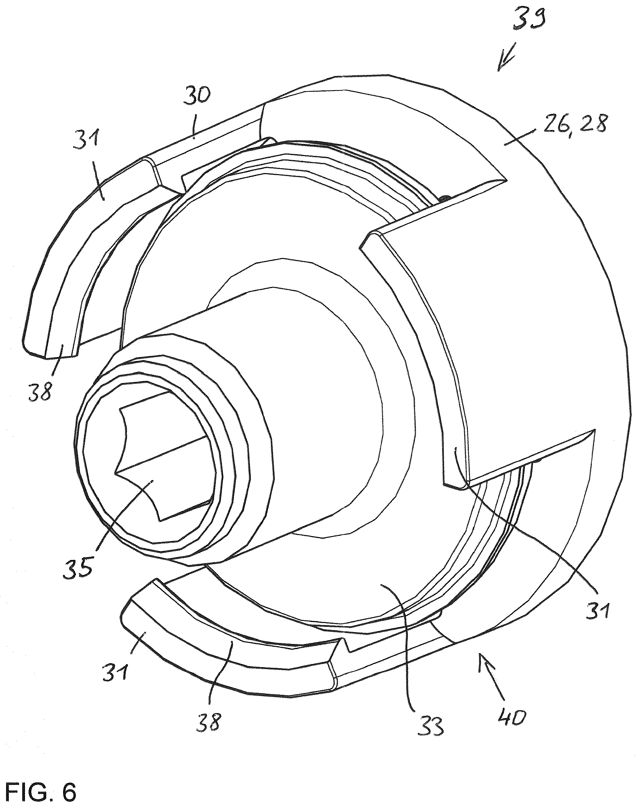

**Fig. 6** shows a pre-assembled unit 39 of the indicator cap 26 and the locking piece 33, where the tongues 30 of the indicator cap 26 embrace and particularly contact the outer surface or diameter of the locking piece 33. As a result, the indicator cap 26 is arranged to move axially in respect to the locking piece 33 and vice versa, particulary guided by the guiding means as explained above.

The pin indicator 24 is at a second end 41 equipped with an indication body 42 e.g. in the shape of a indication piston, arranged to visibly protrude out of the screw head 14 of the release screw 2 in case of axial displacement of the pin indicator 24, caused by axial displacement of the running nut 18 from its outer end position shown in **Fig. 1****,** and of the contact surface 31 of the indicator cap 26, which contact surface 31 is then no more in contact with the running nut 18, during rotation of the release screw 2 for mechanical release of the parking brake.

The contact surface 31 of the axial tongues 30 of the indicator cap 26 is here brought to move with the axial movement of the running nut 18 through spring pressure from a second spring 43 which at its one end is in contact with a seat in the first throughbore 23 of the release screw 2 and which at its other end is in contact with the indication body 42, as can best be seen from **Fig. 3****.**

As a result, the indications means 3 of the spring brake cylinder 1, that enable an external visual control of whether the parking brake is activated or whether it has been mechanically released and thus deactivated, particularly comprise the pin indicator 24, the position sensing means (indicator cap) 26, the release screw 2, the running nut 18 and the locking piece 33. Optionally, also the second spring 43 is comprised therein. These indication means 3 are shown in detail in **Fig. 3****.**

During normal operating function of the spring brake cylinder 1 the indication body 42 is particularly completely lowered into a surrounding recess 44 in the screw head 14 of the release screw 2 **(****Fig 1****).** Immediately when the running nut 18 leaves its outer end position, the indication body 42 will protrude from the recess 44. The indication body 42 is preferably coloured in a warning colour, preferably red, so that service personnel will obtain a clear visual warning-signal when the parking brake has been mechanically released. The indication body 42 can be sealed with an O-ring against the wall of the recess 44.

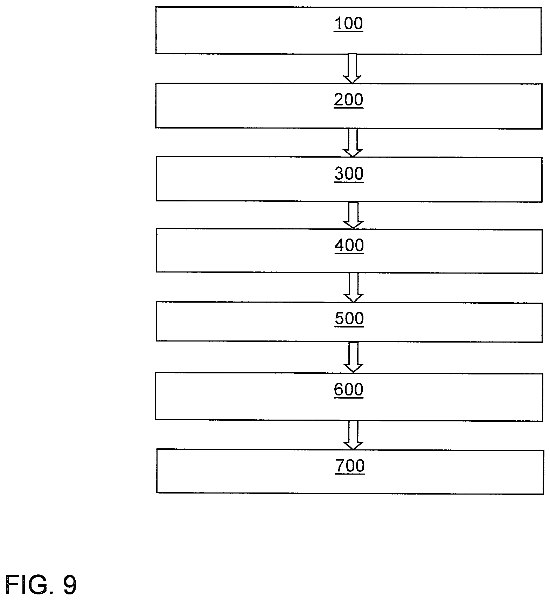

**Fig. 9** shows a flowchart of the steps of a preferred embodiment of a method of manufacturing the spring brake cylinder 1, particularly for manufacturing the indication means 3 of the spring brake cylinder 1.

The method starts with the spring brake cylinder 1 in a condition, where the release screw 2 with the running nut 18 threaded thereon have already been mounted in the cylinder housing 4 and where also the sleeve 19 has been mounted in the blind bore 16 of the piston rod 7.

Then, in a **step 100,** the first spring 22 is positioned in the blind bore 16 of the piston rod 7 at the piston rod bottom 17.

In a next step **200,** the pre-assembled unit 39 **(****Fig. 6****)** of the indicator cap 26 and the locking piece 33 is positioned within the blind bore 16 of the piston rod 7, so that the preassembled unit 39 can contact the first spring 22, particularly with the cylindrical basic body 28 of the indicator cap 26. Then, the first spring 22 is axially arranged between the breathing valve 20 or the piston rod bottom 17, respectively, and the indicator cap 26. In the pre-assembled unit 29 **(****Fig. 6****),** the indicator cap 26 and the locking piece 33 are fixed to each other against relative rotation, in particular by the protrusions 37 **(****Fig. 4****)** and/or by frictional locking. In this pre-assembled condition of the unit 39, it is possible, that the locking piece 33 and the indicator cap 26 can move axially to each other.

In a following **step 300,** the release screw 2 together with the running nut 18 screwed on is positioned on the one hand side in the bearing bush 10 of the cylinder housing 4, and on the other hand side in the the blind bore 16 of the piston rod 7, so that the second through bore 34 of the locking piece 33 is essentially coaxial with the first throughbore 23 of the release screw 2, and the first, for example radial outer thread of the locking piece 33 is essentially coaxial the second, for example radial inner thread of the release screw 2. When this has been done, the situation is shown in **Fig. 7****.**

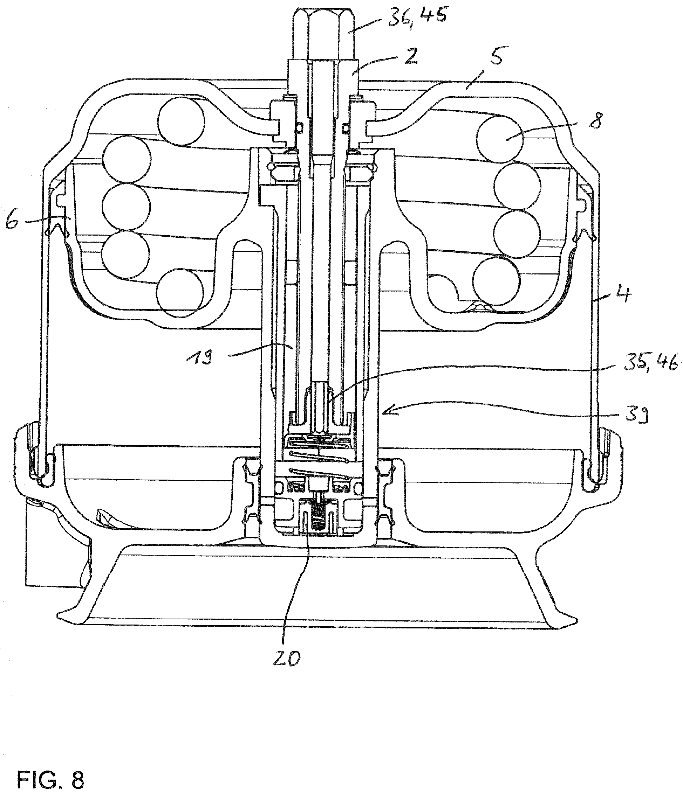

In a next **step 400,** the rotation tool 36 is inserted into the first troughbore 23 of the release screw 2 until it engages the tool engagement surface 35 in the second troughbore 34 of the locking piece 33, as can be seen in **Fig. 8****.** Particularly, the rotation tool 36 has a tool head 45, which has a diameter, that the tool head 45 can first, be supported on the screw head 14 of the release screw 2, and second, has an e.g. hexagonal cross section, so it can be engaged by a further tool, e.g. a wrench to be turned.

In a following **step 500,** the rotation tool 36 is turned in a way that the first thread of the locking piece 33 is threaded with the second thread of the release screw 1, where the locking piece 33 is held in a coaxial position with the release screw 1 by the indicator cap 26, which is stabilized by the preload of the first spring 22 and by the inner diameter of the sleeve19, which precents the indicator cap 26 from tilting. When the first thread of the locking piece 33 is threaded with the second thread of the release screw 1, the indicator cap 26 is rotated together with the locking piece 33 and the rotation tool 36, where the release screw 2 is locked rotationally e.g. by a torque tool being engaged with the screw head 14.

In a next **step 600,** the rotation tool 36 is removed out of the first troughbore 23 of the release screw 2.

In a following **step 700,** the pin indicator 24 together with the second spring 43 is inserted into the first troughbore 23 of the release screw 2 until the first end 25 of the pin indicator 24 axially snap fits with the elastic central opening 29 of the indicator cap 26, whereby the indicator cap 26 is axially supported by the first spring 22.

When the metod is finished, the pin indicator 24, the indication body 42 and the indicator cap 26 connected thereto can axially move in respect to the release screw 2 and the locking piece 33 connected thereto depending on the position ot the running nut 18, preloaded by the second spring 43, as can be best seen in **Fig. 3****.** During this axial movement, the tongues 30 of the indicator cap 26 particularly can slide along the radial outer surface of the locking piece 33.

### LIST OF REFERENCES

- 1: spring brake cylinder
- 2: release screw
- 3: indication means
- 4: cylinder housing
- 5: cylinder bottom
- 6: spring brake piston
- 7: piston rod
- 8: pressure spring
- 9: first end
- 10: bearing bush
- 11: O-ring
- 12: flange
- 13: locking ring
- 14: screw head
- 15: second end
- 16: blind bore
- 17: piston rod bottom
- 18: running nut
- 19: sleeve
- 20: breathing valve
- 21: position sensing means
- 22: first spring
- 23: first troughbore
- 24: pin indicator
- 25: first end
- 26: indicator cap
- 27: snap fit
- 28: basic body
- 29: central opening
- 30: tongues
- 31: contact surface
- 32: slits
- 33: locking peace
- 34: second troughbore
- 35: tool engagement surface
- 36: rotation tool
- 37: protrusions
- 38: clips
- 39: pre-assembled unit
- 40: peripheral recesses
- 41: second end
- 42: indication body
- 43: second spring
- 44: recess
- 45: tool head
- 46: tool engagement surface

## Claims

1. Spring brake cylinder (1) for a vehicle brake comprising:
a) a cylinder housing (4) with a casing wall and a cylinder-bottom (5),
b) a spring brake piston (6) running in said cylinder housing (4) for activation of the brake,
c) a pressure spring (8) positioned between the spring brake piston (6) and the cylinder-bottom (5) for activating the parking brake by mechanically influencing the spring brake piston (6),
d) a hollow release screw (2) with a first troughbore (23), axially locked against movement relative to the cylinder-bottom (5) for the mechanical release of the parking brake, which at a first end (9) is rotatably mounted in the cylinder-bottom (5) and which has a screw head (14) on the outside of the cylinder-bottom (5) and which at a second end (15) runs freely in a bore (16) of the spring brake piston (6),
e) a rotationally locked, running nut (18) threaded onto said release screw (2), where said running nut (18) has an outer end position at a set distance from said cylinder-bottom (5) and is arranged to, through contact against the spring brake piston (6), bring the spring brake piston (6) in the axial direction of the release screw (2) when turning the release screw (2) by manipulation of the screw head (14), and
f) a relative to the release screw (2) axially displaceable pin indicator (24) arranged in the first throughbore (23) of the release screw (2), wherein
h) the pin indicator (24) at a first end (25), located within the cylinder housing (4), is axially fixed to a position sensing means (21, 26) which is provided with a contact surface (31) for contact against the running nut (18); and wherein
i) the pin indicator (24) at a second end (41) has an indication body (42) arranged to visibly protrude out of the screw head (14) of the release screw (2) in case of axial displacement of the pin indicator (24) caused by axial displacement of the running nut (18) from its outer end position, and of the contact surface (31) of the position sensing means (21, 26), which contact surface (31) is in contact with the running nut (18), during rotation of the release screw (2) for mechanical release of the parking brake, where
j) the position sensing means (21, 26) includes an indicator cap (26) with a central opening (29), wherein
k) the first end (25) of the pin indicator (24) is designed to snap fit with a central opening (29) of the indicator cap (26), and in that
l) at least one first spring (22) is arranged between the indicator cap (26) and a bottom (17) of the bore (16) of the spring brake piston (6), **characterised in that** g) the spring brake cylinder further comprises a locking piece (33) that has a second throughbore (34), and a first thread which is threaded with a second thread of the release screw (2), where the pin indicator (11) extends through the second throughbore (34); **in that** the indicator cap and the locking piece are axially displacable to each other; and **in that**
m) the second throughbore (34) of the locking piece (33) is provided with a tool engagement surface (35) which is designed for a rotationally fixed engagement of a rotation tool (36).

2. Spring brake cylinder according to claim 1, **characterized in that** the indicator cap (26) has a basic body (28) with the central opening (29) and axial tongues (30) protruding from the basic body (28), which ends form the contact surface (31) and which radially at least partly embrace the locking piece (33).

3. Spring brake cylinder according to claim 2, **characterized in that** the ends of the axial tongues (30) are provided with radially inward protruding clips (38) that axially limit an axial movement of the locking piece (33) relative to the indicator cap (26).

4. Spring brake cylinder according to one of claims 2 or 3, **characterized in that** the axial tongues (30) are provided with guiding means for axially guiding the indicator cap (26) and the locking piece (33) to each other.

5. Spring brake cylinder according to claim 4, **characterized in that** the guiding means comprises radial inner protrusions (37) of the axial tongues (30).

6. Spring brake cylinder according to one of the preceeding claims, **characterized in that** the indication body (42) is arranged to be lowered into a recess (44) of the screw head (14) of the release screw (2).

7. Spring brake cylinder according to one of the preceeding claims, **characterized in that** the contact surface (31) is brought to accompany the axial displacement of the running nut (18) through spring pressure of a second spring (43).

8. Spring brake cylinder according to one of the preceeding claims, **characterized in that** the indicator cap (26) is made of an elastic plastic material.

9. Spring brake cylinder according to one of the preceeding claims, **characterized in that** from the central opening (29) of the indicator cap (26) slits (32) are extending in radial direction to provide elasticity of the central opening (29) for the snap fit (27) with the first end (25) of the pin indicator (24).

10. Spring brake cylinder according to one of the preceeding claims, **characterized in that** the spring brake piston (6) is provided with a piston rod (7), in which the bore (16) is formed.

11. Combined service and spring brake cylinder comprising a spring brake cylinder (1) according to one of the preceding claims.

12. Vehicle brake comprising a combined service and spring brake cylinder according to claim 11 or a spring brake cylinder (1) according to one of claims 1 to 10.

13. Method for manufacturing a spring brake cylinder (1), particularly for manufacturing indications means (3) of the spring brake cylinder (1), that enable an external visual control of whether the brake is activated or whether it has been mechanically released and thus deactivated, according to one of claims 1 to 10, including the following steps:
a) positioning of the first spring (22) in the bore (16) of the spring brake piston (6) at the bottom (17) of the bore (16),
b) providing a pre-assembled unit (39) of the indicator cap (26) and the locking piece (33) within the bore (16) of the spring brake piston (6), so that the preassembled unit (39) can contact the first spring (22),
c) positioning of the release screw (2) together with the running nut (18) screwed on in the cylinder housing (4) and in the bore (16) of the spring brake piston (6),
d) inserting a rotation tool (36) into the first troughbore (23) of the release screw (2) until it engages the tool engagement surface (35) in the second troughbore (34) of the locking piece (33),
e) turning the rotation tool (36) in a way that first thread of the locking piece (33) is threaded with the second thread of the release screw (2), where the locking piece (33) is held in a coaxial position with the release screw (2) by the indicator cap (26), which is axially preloaded by the first spring (22),
f) removing the rotation tool (36) out of the first troughbore (23) of the release screw (2),
g) inserting the pin indicator (24) into the first troughbore (23) of the release screw (2) until the first end (25) of the pin indicator (24) axially snap fits with the central opening (29) of the indicator cap (26), where the indicator cap (26) is axially supported by the first spring (22).

## Patentansprüche

1. Federspeicherbremszylinder (1) für eine Fahrzeugbremse, umfassend:
a) ein Zylindergehäuse (4) mit einer Gehäusewand und einem Zylinderboden (5),
b) einen Federspeicherbremskolben (6), der im Zylindergehäuse (4) zur Aktivierung der Bremse läuft,
c) eine Druckfeder (8), die zwischen dem Federspeicherbremskolben (6) und dem Zylinderboden (5) positioniert ist, um die Feststellbremse durch mechanische Beeinflussung des Federspeicherbremskolbens (6) zu aktivieren.
d) eine hohle Entriegelungsschraube (2) mit einer ersten Mulde (23), die axial gegen Bewegungen relativ zum Zylinderboden (5) gesichert ist, um die Feststellbremse mechanisch zu lösen, die an einem ersten Ende (9) drehbar im Zylinderboden (5) gelagert ist und die einen Schraubenkopf (14) an der Außenseite des Zylinderbodens (5) aufweist und die an einem zweiten Ende (15) frei in einer Bohrung (16) des Federspeicherbremskolbens (6) läuft,
e) eine drehbar gesicherte, mitlaufende Mutter (18), die auf die Entriegelungsschraube (2) aufgeschraubt ist, wobei die mitlaufende Mutter (18) eine äußere Endposition in einem festgelegten Abstand vom Zylinderboden (5) aufweist und so angeordnet ist, dass sie durch Kontakt mit dem Federspeicherbremskolben (6) den Federspeicherbremskolben beim Drehen der Entriegelungsschraube (2) durch Betätigung des Schraubenkopfes (14) in Axialrichtung der Entriegelungsschraube (2) bewegt, und
f) einen axial verschiebbaren Stiftindikator (24) relativ zur Entriegelungsschraube (2), der in der ersten Durchgangsbohrung (23) der Entriegelungsschraube (2) angeordnet ist,
wobei
h) der Stiftindikator (24) an einem ersten Ende (25), das sich innerhalb des Zylindergehäuses (4) befindet, axial an einer Positionserfassungseinrichtung (21, 26) befestigt ist, die mit einer Kontaktfläche (31) für den Kontakt mit der Laufmutter (18) bereitgestellt ist; und wobei
i) der Stiftindikator (24) an einem zweiten Ende (41) einen Indikationskörper (42) aufweist, der so angeordnet ist, dass er bei axialer Verschiebung des Stiftindikators (24) durch axiale Verschiebung der Laufmutter (18) aus ihrer äußeren Endposition und der Kontaktfläche (31) des Positionserfassungselements (21, 26), deren Kontaktfläche (31) während der Drehung der Entriegelungsschraube (2) zur mechanischen Entriegelung der Feststellbremse mit der Laufmutter (18) in Kontakt steht, sichtbar aus dem Schraubenkopf (14) der Entriegelungsschraube (2) herausragt, wobei
j) die Positionserfassungseinrichtung (21, 26) eine Indikatorkappe (26) mit einer zentralen Öffnung (29) einschließt, wobei
k) das erste Ende (25) des Stiftindikators (24) so ausgelegt ist, dass es in eine zentrale Öffnung (29) der Indikatorkappe (26) einrastet, und **dadurch gekennzeichnet, dass**
l) zumindest eine erste Feder (22) zwischen der Indikatorkappe (26) und dem Boden (17) der Bohrung (16) des Federspeicherbremskolbens (6) angeordnet ist, **dadurch gekennzeichnet, dass** g) der Federspeicherbremszylinder weiter ein Verriegelungsstück (33) umfasst, das eine zweiten Durchgangsbohrung (34) und ein erstes Gewinde aufweist, das mit einem zweiten Gewinde der Entriegelungsschraube (2) verschraubt ist, wobei der Stiftindikator (11) durch die zweite Durchgangsbohrung (34) ragt; dadurch, dass die Indikatorkappe und das Verriegelungsstück axial gegeneinander verschiebbar sind; und dadurch, dass
m) die zweite Durchgangsbohrung (34) des Verriegelungsstücks (33) mit einer Werkzeugeingriffsfläche (35) bereitgestellt ist, die für einen rotationsfesten Eingriff eines Rotationswerkzeugs (36) ausgelegt ist.

2. Federspeicherbremszylinder nach Anspruch 1, **dadurch gekennzeichnet, dass** die Indikatorkappe (26) einen Grundkörper (28) mit der zentralen Öffnung (29) und axialen Zungen (30) aufweist, die vom Grundkörper (28) vorragen, deren Enden die Kontaktfläche (31) ausbilden und die das Verriegelungsstück (33) radial zumindest teilweise umschließen.

3. Federspeicherbremszylinder nach Anspruch 2, **dadurch gekennzeichnet, dass** die Enden der axialen Zungen (30) mit radial nach innen ragenden Klammern (38) bereitgestellt sind, die die axiale Bewegung des Verriegelungsstücks (33) relativ zur Indikatorkappe (26) axial begrenzen.

4. Federspeicherbremszylinder nach einem der Ansprüche 2 oder 3, **dadurch gekennzeichnet, dass** die axialen Zungen (30) mit Führungsmitteln bereitgestellt sind, um die Indikatorkappe (26) und das Verriegelungsstück (33) axial zueinander zu führen.

5. Federspeicherbremszylinder nach Anspruch 4, **dadurch gekennzeichnet, dass** das Führungsmittel radiale innere Vorsprünge (37) der axialen Zungen (30) umfasst.

6. Federspeicherbremszylinder nach einem der vorstehenden Ansprüche, **dadurch gekennzeichnet, dass** der Indikationskörper (42) so angeordnet ist, dass er in eine Aussparung (44) des Schraubenkopfes (14) der Entriegelungsschraube (2) abgesenkt werden kann.

7. Federspeicherbremszylinder nach einem der vorstehenden Ansprüche, **dadurch gekennzeichnet, dass** die Kontaktfläche (31) durch Federdruck einer zweiten Feder (43) dazu gebracht wird, der axialen Verschiebung der Laufmutter (18) zu folgen.

8. Federspeicherbremszylinder nach einem der vorstehenden Ansprüche, **dadurch gekennzeichnet, dass** die Indikatorkappe (26) aus einem elastischen Kunststoffmaterial besteht.

9. Federspeicherbremszylinder nach einem der vorstehenden Ansprüche, **dadurch gekennzeichnet, dass** von der zentralen Öffnung (29) der Indikatorkappe (26) Schlitze (32) in radialer Richtung verlaufen, um die Elastizität der zentralen Öffnung (29) für den Schnappverschluss (27) mit dem ersten Ende (25) des Stiftindikators (24) bereitzustellen.

10. Federspeicherbremszylinder nach einem der vorstehenden Ansprüche, **dadurch gekennzeichnet, dass** der Federspeicherbremskolben (6) mit einer Kolbenstange (7) bereitgestellt ist, in der die Bohrung (16) ausgebildet ist.

11. Kombinierter Betriebs- und Federspeicherbremszylinder, umfassend einen Federspeicherbremszylinder (1) nach einem der vorstehenden Ansprüche.

12. Fahrzeugbremse, umfassend einen kombinierten Betriebs- und Federspeicherbremszylinder nach Anspruch 11 oder einen Federspeicherbremszylinder (1) nach einem der Ansprüche 1 bis 10.

13. Verfahren zur Herstellung eines Federspeicherbremszylinders (1), insbesondere zur Herstellung von Anzeigeeinrichtungen (3) für den Federspeicherbremszylinder (1), die eine externe visuelle Kontrolle darüber ermöglichen, ob die Bremse aktiviert ist oder ob sie mechanisch gelöst und damit deaktiviert wurde, nach einem der Ansprüche 1 bis 10, einschließend die folgenden Schritte:
a) Positionieren der ersten Feder (22) in der Bohrung (16) des Federspeicherbremskolbens (6) am Boden (17) der Bohrung (16),
b) Bereitstellen einer vormontierten Einheit (39) aus der Indikatorkappe (26) und dem Verriegelungsstück (33) innerhalb der Bohrung (16) des Federspeicherbremskolbens (6), so dass die vormontierte Einheit (39) mit der ersten Feder (22) in Kontakt treten kann,
c) Positionieren der Entriegelungsschraube (2) zusammen mit der Laufmutter (18), die im Zylindergehäuse (4) und in der Bohrung (16) des Federbremskolbens (6) verschraubt ist,
d) Einführen eines Drehwerkzeugs (36) in die erste Nut (23) der Entriegelungsschraube (2), bis es in die Werkzeugeingriffsfläche (35) in der zweiten Nut (34) des Verriegelungsstücks (33) eingreift,
e) Drehen des Drehwerkzeugs (36) so, dass das erste Gewinde des Verriegelungsstücks (33) mit dem zweiten Gewinde der Entriegelungsschraube (2) zusammenwirkt, wobei das Verriegelungsstück (33) durch die Indikatorkappe (26), die axial durch die erste Feder (22) vorgespannt ist, in einer koaxialen Position mit der Entriegelungsschraube (2) gehalten wird,
f) Herausziehen des Drehwerkzeugs (36) aus der ersten Nut (23) der Entriegelungsschraube (2),
g) Einführen des Stiftindikators (24) in die erste Mulde (23) der Entriegelungsschraube (2), bis das erste Ende (25) des Stiftindikators (24) axial in die zentrale Öffnung (29) der Indikatorkappe (26) einrastet, wobei die Indikatorkappe (26) axial von der ersten Feder (22) gestützt wird.

## Revendications

1. Cylindre (1) de frein à ressort pour frein de véhicule comprenant :
a) un logement (4) de cylindre présentant une paroi d'enveloppe et un fond (5) de cylindre,
b) un piston (6) de frein à ressort se déplaçant dans ledit logement (4) de cylindre pour l'activation du frein,
c) un ressort de pression (8) positionné entre le piston (6) de frein à ressort et le fond (5) de cylindre pour activer le frein de stationnement en agissant mécaniquement sur le piston (6) de frein à ressort,
d) une vis creuse de desserrage (2) présentant un premier alésage traversant (23), verrouillée axialement contre tout mouvement par rapport au fond (5) de cylindre pour desserrer mécaniquement le frein de stationnement, qui est montée de manière rotative dans le fond (5) de cylindre sur une première extrémité (9) et qui présente une tête de vis (14) à l'extérieur du fond (5) de cylindre, et qui tourne librement dans un alésage (16) du piston (6) de frein à ressort sur une seconde extrémité (15),
e) un écrou mobile verrouillé en rotation (18) vissé sur ladite vis de desserrage (2), ledit écrou mobile (18) présentant une position d'extrémité extérieure à une distance fixe du fond (5) de cylindre et étant conçu pour, par contact avec le piston (6) de frein à ressort, amener le piston (6) de frein à ressort dans la direction axiale de la vis de desserrage (2) lors de la rotation de la vis de desserrage (2) par manipulation de la tête de vis (14), et
f) un ergot indicateur (24) déplaçable axialement par rapport à la vis de desserrage (2), agencé dans le premier alésage traversant (23) de la vis de desserrage (2),
dans lequel
h) l'ergot indicateur (24) est fixé axialement sur une première extrémité (25), située à l'intérieur du logement (4) de cylindre, à un moyen de détection de position (21, 26) qui est muni d'une surface de contact (31) destinée à entrer en contact avec l'écrou mobile (18) ; et dans lequel
i) l'ergot indicateur (24) présente, sur une seconde extrémité (41), un corps indicateur (42) conçu pour dépasser visiblement de la tête de vis (14) de la vis de desserrage (2) en cas de déplacement axial de l'ergot indicateur (24) causé par le déplacement axial de l'écrou mobile (18) par rapport à sa position d'extrémité extérieure, et de la surface de contact (31) du moyen de détection de position (21, 26), laquelle surface de contact (31) est en contact avec l'écrou mobile (18), lors de la rotation de la vis de desserrage (2) pour desserrer mécaniquement le frein de stationnement, dans lequel
j) le moyen de détection de position (21, 26) inclut un capuchon indicateur (26) présentant une ouverture centrale (29), dans lequel
k) la première extrémité (25) de l'ergot indicateur (24) est conçue pour s'encliqueter dans une ouverture centrale (29) du capuchon indicateur (26), et en ce que
l) au moins un premier ressort (22) est agencé entre le capuchon indicateur (26) et un fond (17) de l'alésage (16) du piston (6) de frein à ressort, **caractérisé en ce que** g) le cylindre de frein à ressort comprend en outre un élément de verrouillage (33) qui présente un second alésage traversant (34) et un premier filetage qui est vissé avec un second filetage de la vis de desserrage (2), l'ergot indicateur (11) s'étendant à travers le second alésage traversant (34); **en ce que** le capuchon indicateur et l'élément de verrouillage sont déplaçables axialement l'un par rapport à l'autre ; et **en ce que**
m) le second alésage traversant (34) de l'élément de verrouillage (33) est muni d'une surface de mise en prise d'outil (35) conçue pour une mise en prise fixe en rotation d'un outil rotatif (36).

2. Cylindre de frein à ressort selon la revendication 1, **caractérisé en ce que** le capuchon indicateur (26) présente un corps de base (28) avec l'ouverture centrale (29) et des languettes axiales (30) faisant saillie depuis le corps de base (28), dont les extrémités forment la surface de contact (31) et qui entourent radialement au moins partiellement l'élément de verrouillage (33).

3. Cylindre de frein à ressort selon la revendication 2, **caractérisé en ce que** les extrémités des languettes axiales (30) sont munies de clips saillants radialement vers l'intérieur (38) qui limitent axialement un mouvement axial de l'élément de verrouillage (33) par rapport au capuchon indicateur (26).

4. Cylindre de frein à ressort selon l'une des revendications 2 ou 3, **caractérisé en ce que** les languettes axiales (30) sont munies d'un moyen de guidage pour guider axialement le capuchon indicateur (26) et l'élément de verrouillage (33) l'un vers l'autre.

5. Cylindre de frein à ressort selon la revendication 4, **caractérisé en ce que** le moyen de guidage comprend des saillies internes radiales (37) des languettes axiales (30).

6. Cylindre de frein à ressort selon l'une des revendications précédentes, **caractérisé en ce que** le corps indicateur (42) est conçu pour être abaissé dans un évidement (44) de la tête de vis (14) de la vis de desserrage (2).

7. Cylindre de frein à ressort selon l'une des revendications précédentes, **caractérisé en ce que** la surface de contact (31) est amenée à accompagner le déplacement axial de l'écrou mobile (18) par la pression de ressort d'un second ressort (43).

8. Cylindre de frein à ressort selon l'une des revendications précédentes, **caractérisé en ce que** le capuchon indicateur (26) est en matériau plastique élastique.

9. Cylindre de frein à ressort selon l'une des revendications précédentes, **caractérisé en ce que,** des fentes (32) s'étendent en direction radiale à partir de l'ouverture centrale (29) du capuchon indicateur (26), pour assurer l'élasticité de l'ouverture centrale (29) pour permettre l'encliquetage (27) avec la première extrémité (25) de l'ergot indicateur (24).

10. Cylindre de frein à ressort selon l'une des revendications précédentes, **caractérisé en ce que** le piston (6) de frein à ressort est muni d'une tige de piston (7), dans laquelle est formé l'alésage (16).

11. Cylindre de frein de service et à ressort combiné comprenant un cylindre (1) de frein à ressort selon l'une des revendications précédentes.

12. Frein de véhicule comprenant un cylindre de frein de service et à ressort combiné selon la revendication 11 ou un cylindre (1) de frein à ressort selon l'une des revendications 1 à 10.

13. Procédé de fabrication d'un cylindre (1) de frein à ressort, notamment pour la fabrication de moyens d'indication (3) du cylindre (1) de frein à ressort, qui permettent une vérification visuelle extérieure de l'activation du frein ou de son relâchement mécanique et donc de sa désactivation, selon l'une des revendications 1 à 10, incluant les étapes suivantes :
a) le positionnement du premier ressort (22) dans l'alésage (16) du piston (6) de frein à ressort au fond (17) de l'alésage (16),
b) la fourniture d'une unité pré-assemblée (39) du capuchon indicateur (26) et de l'élément de verrouillage (33) dans l'alésage (16) du piston (6) de frein à ressort, de sorte que l'unité pré-assemblée (39) puisse entrer en contact avec le premier ressort (22),
c) le positionnement de la vis de desserrage (2) avec l'écrou mobile (18) vissé dans le logement (4) de cylindre et dans l'alésage (16) du piston (6) de frein à ressort,
d) l'insertion d'un outil rotatif (36) dans le premier alésage traversant (23) de la vis de desserrage (2) jusqu'à ce qu'il vienne en prise avec la surface de mise en prise d'outil (35) dans le second alésage traversant (34) de l'élément de verrouillage (33),
e) la rotation de l'outil rotatif (36) afin que le premier filetage de l'élément de verrouillage (33) soit vissé avec le second filetage de la vis de desserrage (2), l'élément de verrouillage (33) étant maintenu en position coaxiale avec la vis de desserrage (2) par le capuchon indicateur (26), qui est préchargé axialement par le premier ressort (22),
f) le retrait de l'outil rotatif (36) du premier alésage traversant (23) de la vis de desserrage (2),
g) l'insertion de l'ergot indicateur (24) dans le premier alésage traversant (23) de la vis de desserrage (2) jusqu'à ce que la première extrémité (25) de l'ergot indicateur (24) s'encliquette axialement dans l'ouverture centrale (29) du capuchon indicateur (26), dans lequel le capuchon indicateur (26) est soutenu axialement par le premier ressort (22).
